(19) Europäisches Patentamt / European Patent Office / Office européen des brevets

(11) **EP 3 502 904 B1**

(12) **FASCICULE DE BREVET EUROPEEN**

(45) Date de publication et mention de la délivrance du brevet:
**07.09.2022 Bulletin 2022/36**

(21) Numéro de dépôt: **18213063.3**

(22) Date de dépôt: **17.12.2018**

(51) Classification Internationale des Brevets (IPC):
**G06F 12/0862** (2016.01)   **G06F 9/30** (2018.01)

(52) Classification Coopérative des Brevets (CPC):
**G06F 12/0862;** G06F 2212/502; G06F 2212/6026

(54) **PROCÉDÉ D'AMÉLIORATION DU TEMPS D'EXÉCUTION D'UNE APPLICATION INFORMATIQUE**

VERBESSERUNGSVERFAHREN DER AUSFÜHRUNGSZEIT EINER IT-ANWENDUNG

METHOD FOR IMPROVING THE EXECUTION TIME OF A COMPUTER APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1763189**

(43) Date de publication de la demande:
**26.06.2019 Bulletin 2019/26**

(73) Titulaire: **Bull SAS**
**78340 Les Clayes-sous-Bois (FR)**

(72) Inventeurs:
• **PHAM, Trong Ton**
**38000 Grenoble (FR)**
• **VINCENT, Lionel**
**38600 Fontaine (FR)**
• **PICHON, Grégoire**
**38180 Seyssins (FR)**

(74) Mandataire: **Plasseraud IP**
**66, rue de la Chaussée d'Antin**
**75440 Paris Cedex 09 (FR)**

(56) Documents cités:
**EP-A1- 2 947 557     US-A1- 2017 031 823**

• **GUTTMAN DIANA ET AL: "Machine learning techniques for improved data prefetching", 5TH INTERNATIONAL CONFERENCE ON ENERGY AWARE COMPUTING SYSTEMS & APPLICATIONS, IEEE, 24 mars 2015 (2015-03-24), pages 1-4, XP032827525, DOI: 10.1109/ICEAC.2015.7352208**
• **SHIH-WEI LIAO ET AL: "Machine learning-based prefetch optimization for data center applications", HIGH PERFORMANCE COMPUTING NETWORKING, STORAGE AND ANALYSIS, ACM, 14 novembre 2009 (2009-11-14), pages 1-10, XP058111903, DOI: 10.1145/1654059.1654116 ISBN: 978-1-60558-744-8**
• **@bmj0114: "K-Means Clustering via PCA", Qiita , 9 août 2017 (2017-08-09), pages 1-5, XP002784431, Extrait de l'Internet: URL:https://qiita.com/bmj0114/items/db9145 a707cb6ed13201 [extrait le 2018-09-05]**

**Description**

DOMAINE DE L'INVENTION

L'invention concerne un procédé d'amélioration du temps d'exécution d'une application informatique par la détermination d'un type de séquence temporelle d'accès mémoire générée par l'application informatique.

CONTEXTE DE L'INVENTION

Selon un premier art antérieur, par exemple présenté dans le document Input/Output Access Pattern Classification Using Markov Models (Tara M. Madhyastha et Daniel A. Reed, tiré du livre In proccedings of the Fifth Workshop on Input/Output in Parallel and Distributed Systems pages 57 à 67), il est connu un procédé de prédiction des séquences temporelles d'accès mémoire futures sur la base des séquences temporelles d'accès mémoire passées. Un premier inconvénient de ce premier art antérieur est d'être trop complexe pour pouvoir s'adapter aisément à une application informatique tournant sur un grand nombre de noeuds de calcul. Un deuxième inconvénient de ce premier art antérieur est d'être trop complexe pour pouvoir s'adapter aisément à une application informatique utilisant des séquences temporelles d'accès mémoire de type complexe.

Selon un deuxième art antérieur, par exemple présenté dans le document I/O Accélération with Pattern Detection (He, Jun and Bent, John and Torres, Aaron and Grider, Gary and Gibson, Garth and Maltzahn, Carlos and Sun, Xian-He, tiré du livre Proceedings of the 22Nd International Symposium on High-performance Parallel and Distributed Computing pages 25 à 36), il est connu un procédé de prédiction des séquences temporelles d'accès mémoire futures sur la base des séquences temporelles d'accès mémoire passées. Un premier inconvénient de ce deuxième art antérieur est d'être trop rigide pour pouvoir s'adapter à une application informatique tournant sur un grand nombre de noeuds de calcul et susceptible d'utiliser plusieurs types de séquences temporelles d'accès mémoire. Un deuxième inconvénient de ce deuxième art antérieur est d'être trop limité pour pouvoir s'adapter à une application informatique utilisant des séquences temporelles d'accès mémoire de type complexe.

Selon un troisième art antérieur, par exemple présenté dans les documents US7676630 et US6789171, il est connu un procédé de prédiction des séquences temporelles d'accès mémoire futures sur la base des séquences temporelles d'accès mémoire passées. Un premier inconvénient de ce troisième art antérieur est d'être trop rigide et trop limité pour pouvoir s'adapter aisément à une application informatique utilisant des séquences temporelles d'accès mémoire de type complexe. Un deuxième inconvénient de ce troisième art antérieur est de devenir trop peu fiable dans le cas d'une application informatique utilisant des séquences temporelles d'accès mémoire de type complexe.

Il est connu selon un quatrième art antérieur EP2947557 un procédé de pré-chargement de données par agrégation de données étant chargées durant une même période d'exécution dans un groupe de données co-accédées. Lorsqu'une demande de lecture d'une donnée appartenant à un groupe de données co-accédées est exécutée, l'ensemble du groupe de données est pré-chargé. Toutefois, ce procédé est bien trop rigide et limité pour pouvoir s'adapter aisément à une application informatique utilisant des séquences temporelles d'accès mémoire de type complexe.

RESUME DE L'INVENTION

L'invention propose un procédé d'amélioration du temps d'exécution d'une application informatique par prédiction des séquences temporelles d'accès mémoire futures sur la base des séquences temporelles d'accès mémoire passées, mais qui présente un meilleur compromis entre efficacité de résultat et simplicité de mise en œuvre, surtout dans le cas d'une application informatique utilisant des séquences temporelles d'accès mémoire de type complexe. L'invention propose de préférence un procédé d'amélioration du temps d'exécution d'une application informatique tournant sur un grand nombre de noeuds de calcul et susceptible d'utiliser plusieurs types de séquences temporelles d'accès mémoire.

Pour cela, l'invention propose l'utilisation d'un modèle d'apprentissage, qui est préalablement paramétré à partir d'une base de données d'apprentissage comprenant plusieurs types prédéterminés de séquences temporelles d'accès mémoire, pour la réalisation de l'étape de détermination du type de séquence temporelle d'accès mémoire, de préférence pour la réalisation de cette seule étape de détermination et de préférence pour la détermination seulement de ce type de séquence temporelle d'accès mémoire. Cela contribue à simplifier la mise en œuvre, tout en garantissant l'efficacité du résultat, cette utilisation limitée du modèle d'apprentissage se révélant suffisante.

L'invention propose un procédé d'amélioration du temps d'exécution d'une application informatique selon la revendication 1.

Ainsi, le temps d'exécution de l'application informatique est grandement amélioré puisque les données à utiliser dans un futur proche ont déjà été chargées dans la mémoire cache, en particulier parce-que ce sont les bonnes données qui ont été chargées dans la mémoire cache, c'est-à-dire celles dont l'application informatique en cours de déroulement va effectivement avoir besoin juste après leur pré-chargement.

Selon un autre aspect, le cycle est répété en permanence et en temps réel.

De cette manière, le gain de temps d'exécution de l'application informatique est obtenu sur tout le déroulement de l'exécution de l'application informatique.

Selon un autre aspect, l'étape de pré-chargement associe respectivement aux types de séquence temporelle d'accès mémoire déterminés des types prédéterminés de pré-chargement de données.

En effet, les stratégies de pré-chargement à mettre en œuvre ne sont pas identiques pour tous les types de séquences temporelles d'accès mémoire. L'association d'un type prédéterminé de pré-chargement de données à un type de séquence temporelle d'accès mémoire permet de réduire encore plus le temps d'exécution de l'application informatique. En effet, le pré-chargement des données est plus efficace car il permet ensuite un déroulement plus rapide de l'exécution de l'application lorsqu'il est fait en fonction du type de données à charger.

Selon un autre aspect, l'étape de détermination comprend 4 types de séquence temporelle d'accès mémoire qui sont :

    o le type d'accès séquentiel dans lequel des blocs de données sont lus et/ou écrits consécutivement dans une zone mémoire,
    o le type d'accès multi-séquentiel avec un décalage régulier entre les séquences, dans lequel des blocs de données sont lus et/ou écrits à partir de plusieurs endroits différents d'une zone mémoire, en passant régulièrement d'un endroit à l'autre,
    o le type d'accès aléatoire,
    o le type d'accès complexe dans lequel la séquence est formée de sous-séquences régulières ou quasi-régulières qui se répètent mais de manière désordonnée et/ou dans lequel la séquence est régulière ou quasi-régulière et est formée de sous-séquences qui se répètent mais de manière désordonnée.

De cette manière, les nombreuses séquences temporelles d'accès mémoire sont regroupées en un nombre limité de catégories auxquelles sont respectivement associés des types de pré-chargement adaptés et homogènes, améliorant encore la réduction du temps d'exécution de l'application informatique, en ayant encore mieux anticipé les données à pré-charger pour usage immédiat par l'application informatique en cours d'exécution.

Selon un autre aspect, aucune donnée n'est pré-chargée dans l'étape de pré-chargement associée au type d'accès aléatoire.

De cette manière, le modèle d'apprentissage n'associe pas un type de pré-chargement prédéterminé au type d'accès aléatoire. Cela permet de ne pas fausser les futurs pré-chargements de données en associant un mauvais type de pré-chargement à un type de séquence temporelle d'accès mémoire. Cela évite également de pré-charger des données totalement inadaptées lesquelles devront ensuite être déchargées avant de pouvoir recharger avec les bonnes données, entraînant alors du travail inutile et du retard dans le traitement du travail utile.

Selon un autre aspect, une séquence temporelle d'accès mémoire comprend plusieurs opérations d'accès mémoire qui se succèdent dans le temps :

    ➢ de préférence au moins 30 opérations, encore plus de préférence au moins 40 opérations,
    ➢ et/ou de préférence au plus 100 opérations, encore plus de préférence au plus 60 opérations.

De cette manière, le regroupement de plusieurs opérations permet d'obtenir un résultat statistique et fiable du type de séquence temporelle d'accès mémoire. D'autre part, le nombre d'opérations nécessaires pour obtenir un résultat fiable est assez peu élevé, puisqu'entre 30 et 100 opérations maximum, le taux de fiabilité du procédé est déjà très bon. Le compromis entre simplicité de mise en œuvre et efficacité de prédiction est ainsi encore amélioré et bien optimisé.

Selon un autre aspect, une séquence temporelle d'accès mémoire est sous la forme d'une fenêtre glissante au cours du temps et comprenant un nombre fixe d'opérations.

La fenêtre glissante peut être choisie pour glisser d'opération d'accès mémoire en opération d'accès mémoire successive. Dans ce cas, le nombre de calculs est augmenté, ainsi que la robustesse du procédé.

En variante, le regroupement peut être réalisé de bloc d'opérations d'accès mémoire en bloc d'opérations d'accès mémoire, par exemple toutes les 40 opérations. Dans ce cas, le procédé est moins réactif mais il est moins gourmand en temps de calcul.

Selon un autre aspect, le cycle comprend, après ladite étape de pré-chargement de données, une étape d'utilisation desdites données pré-chargées dans le système de mémoire cache.

Selon un autre aspect, le modèle d'apprentissage n'a été préalablement paramétré, à partir d'une base de données de certains types prédéterminés de séquences temporelles d'accès mémoire, qu'une seule fois, mais il peut être re-paramétré en cas d'ajout d'au moins un nouveau type prédéterminé de séquence temporelle d'accès mémoire dans ladite base de données.

De cette manière, de nouveaux types de séquence temporelle d'accès mémoire peuvent être intégrés la base de données. Cela permet d'améliorer encore le temps d'exécution de l'application informatique puisque la base de données comprend une plus large gamme de types de séquence temporelle d'accès mémoire différents. D'autre part, même si un type de séquence temporelle d'accès mémoire n'est pas inclus dans la base de données au départ, la mise à jour de la base de données en re-paramétrant le modèle d'apprentissage permet de reconnaître ce type de séquence temporelle d'accès mémoire pour la détermination future de ce type de séquence temporelle d'accès mémoire.

Selon un autre aspect, le type de séquence temporelle d'accès mémoire est défini par la variation au cours du temps de deux caractéristiques qui sont d'une part la taille des blocs de données lus et/ou écrits et d'autre part la position des blocs de données dans la zone mémoire où ils sont lus et/ou écrits.

De cette manière, la séquence temporelle d'accès mémoire est définie de manière simple et efficace, car il suffit de deux caractéristiques simples pour que cette séquence temporelle d'accès mémoire soit définie de manière bien représentative.

Selon un autre aspect, le modèle d'apprentissage est basé sur l'utilisation d'un algorithme de type «K-moyennes ».

L'algorithme k-moyennes est un algorithme dont l'implémentation est relativement aisée et rapide et qui se trouve être particulièrement bien adaptée pour déterminer un type d'élément qui appartient à l'une ou l'autre d'un nombre limité de classes prédéterminées. Il permet de regrouper des données en un nombre de classes prédéfinies, ce qui est idéal pour la détermination de types de séquences temporelles d'accès mémoire. L'algorithme k-moyennes peut être entraîné afin de former un modèle d'apprentissage fiable.

Selon un autre aspect, le nombre des classes dudit algorithme est strictement supérieur au nombre de types prédéterminés de pré-chargement de données.

De cette manière, un type de séquence temporelle d'accès mémoire peut être associé à au moins une classe. Chaque classe de l'algorithme k-moyennes est associée à un unique type prédéterminé de pré-chargement de données. Plusieurs classes peuvent être associées au même type prédéterminé de pré-chargement de données. En effet, le regroupement de points correspondant à un même type de séquence temporelle d'accès mémoire, au sein d'une seule classe, peut ne pas être possible spatialement ou bien se révéler particulièrement difficile. La création de plusieurs classes pour un même type de séquence temporelle d'accès mémoire permet d'éviter des erreurs d'attribution, et donc des erreurs de pré-chargement des données.

Selon un autre aspect, le nombre des classes dudit algorithme est compris entre 2 et 10, de préférence entre 3 et 10.

Le fait de ne pas augmenter significativement le nombre de classes de l'algorithme permet de réduire le temps d'implémentation de l'algorithme. Cela permet également de réduire le temps d'exécution de l'application informatique puisque le nombre de calculs permettant la détermination d'un type de séquence temporelle d'accès mémoire est lié au nombre de classes.

Selon un autre aspect, le cycle comprend, préalablement à ladite étape de détermination, successivement :

➤ une étape d'extraction de propriétés de données représentatives du type de séquence temporelle d'accès mémoire, suivie d'une étape de regroupement de ces propriétés extraites en vecteurs multidimensionnels,
➤ ladite étape d'extraction étant de préférence précédée d'une étape de prétraitement réalisant une normalisation desdites données représentatives,
➤ ladite étape de regroupement étant de préférence suivie par une étape de projection par analyse en composantes principales, réduisant le nombre de dimensions desdits vecteurs.

De cette manière, le nombre de calculs est allégé tout en conservant la pertinence du résultat. Avantageusement, la normalisation permet d'éviter des distorsions dans le traitement des données en fonction de leur seule amplitude, non représentative du type de séquence temporelle d'accès mémoire. Avantageusement, la projection permet de réduire le volume de calcul tout en conservant l'intégralité de l'information utile.

Selon un autre aspect, l'application informatique tourne sur au moins plusieurs centaines de processus d'un ensemble de noeuds de calcul d'un même réseau, de préférence sur au moins plusieurs milliers de ces processus, encore plus de préférence sur au moins plusieurs dizaines de milliers de ces processus et l'application a accès à plusieurs centaines de fichiers depuis un même processus.

Le procédé est donc particulièrement intéressant pour être mis en œuvre sur des systèmes complexes, car d'une part les séquences temporelles d'accès mémoire ont tendance à y être plus répétitives que sur les systèmes plus simples, et d'autre part le temps d'exécution gagné par chaque pré-chargement réalisé à bon escient est démultiplié par le grand nombre d'opérations effectuées.

BREVE DESCRIPTION DES DESSINS

La figure la est un ordinogramme représentant les principales étapes du procédé selon un exemple de réalisation de l'invention.
La figure 1b est un ordinogramme représentant les principales étapes du procédé selon un autre exemple de réalisation de l'invention.
Les figures 2a et 2b sont un ordinogramme représentant les principales étapes du cycle du procédé selon un exemple de réalisation de l'invention.
Les figures 3a et 3b sont un ordinogramme représentant les principales étapes de l'apprentissage du procédé, ainsi que l'étape de détermination du type de séquence temporelle d'accès mémoire se déroulant au moyen de l'étape d'apprentissage selon un exemple de réalisation de l'invention.

DESCRIPTION DETAILLEE DE L'INVENTION

La figure la représente schématiquement, sous la forme d'un ordinogramme, le principe général d'un exemple de procédé selon un mode de réalisation de l'invention.

L'étape d'apprentissage du procédé selon le mode de réalisation illustré figure la est illustrée par les blocs SI à S3. L'étape de détermination du type de séquence temporelle d'accès mémoire est illustrée par les blocs S4 à S7. L'étape de pré-chargement de données et l'étape d'utilisation des données pré-chargées dans le système de mémoire cache sont respectivement illustrées par les blocs S8 et S9.

L'étape d'apprentissage peut être réalisée à partir d'une base de données, illustrée au bloc S1, comprenant une base de séquences temporelles d'accès mémoire. Au bloc S2, les données représentatives des types de séquences temporelles d'accès mémoire comprises dans la base de données sont extraites. Les données représentatives peuvent être regroupées en des vecteurs multidimensionnels. Les vecteurs peuvent être ensuite utilisés pour la création du modèle d'apprentissage à l'étape S3. Le modèle d'apprentissage est notamment utilisé pour détecter le type de séquence temporelle d'accès mémoire correspondant à des séquences temporelles d'accès mémoire générées durant l'exécution de l'application.

L'étape d'apprentissage peut être réalisée hors ligne, c'est-à-dire lorsque l'application informatique ne tourne pas. L'apprentissage n'est par exemple réalisée qu'une seule fois, et préalablement à l'étape de détermination. Toutefois, lorsqu'un type de séquence temporelle d'accès mémoire non existant dans la base de données est déterminé, il est possible de rejouer l'apprentissage afin d'y intégrer ce type de séquence temporelle d'accès mémoire dans la base de données. Ainsi, le type de séquence temporelle d'accès mémoire peut être reconnu pour une future séquence temporelle d'accès mémoire.

D'autre part, le modèle d'apprentissage étant construit à partir d'un grand nombre de séquences temporelles d'accès mémoire, il est possible d'assimiler un type de séquence temporelle d'accès mémoire non directement connu à un type de séquence temporelle d'accès mémoire déjà connu de la base de données, notamment lorsque les deux types de séquence temporelle d'accès mémoire se ressemblent. Par exemple, le modèle d'apprentissage est apte à déterminer qu'une séquence temporelle d'accès mémoire est un accès multiséquentiel, même si le décalage entre les opérations d'accès mémoire n'est pas directement connu du modèle d'apprentissage.

L'étape de détermination est représentée par les blocs S4 à S7. L'étape de détermination S4 à S7 est réalisée en ligne, c'est-à-dire en cours d'exécution de l'application informatique. L'application informatique tourne sur au moins plusieurs centaines de processus d'un ensemble de noeuds de calcul d'un même réseau, de préférence sur au moins plusieurs milliers de ces processus, encore plus de préférence sur au moins plusieurs dizaines de milliers de ces processus. Un nœud est une unité de calcul. Un processus est un programme en cours d'exécution sur un ordinateur. Il peut être défini comme un ensemble d'instructions à exécuter, pouvant être dans la mémoire morte ou pouvant être chargé depuis la mémoire de masse la mémoire vive. L'application a accès à plusieurs centaines de fichiers depuis un même processus.

L'étape de détermination comprend par exemple quatre types de séquences temporelles d'accès mémoire. Le type de séquence temporelle d'accès mémoire est notamment défini par la variation au cours du temps de deux caractéristiques qui sont la taille des blocs de données lus et/ou écrits ainsi que la position des blocs de données dans la zone mémoire où ils sont lus et/ou écrits.

Le premier type est un accès séquentiel dans lequel des blocs de données sont lus et/ou écrits consécutivement dans une zone mémoire. Le deuxième type est un accès multi-séquentiel avec un décalage régulier entre les séquences temporelles d'accès mémoire, dans lequel des blocs de données sont lus et/ou écrits à partir de plusieurs endroits différents d'une zone mémoire, en passant régulièrement d'un endroit à l'autre. Le troisième type est un accès aléatoire, dans lequel la position des blocs de données dans la zone mémoire où ils sont lus et/ou écrits et la taille des blocs de données varient aléatoirement. Le quatrième type est un accès complexe dans lequel la séquence temporelle d'accès mémoire est formée de sous-séquences régulières ou quasi-régulières qui se répètent de manière désordonnée. L'accès complexe comprend également un accès dans lequel la séquence temporelle d'accès mémoire est régulière ou quasi-régulière et est formée de sous-séquences se répétant de manière désordonné.

Chaque séquence temporelle d'accès mémoire peut notamment comprendre plusieurs opérations d'accès mémoire se succédant dans le temps. Dans un exemple de réalisation, chaque séquence temporelle d'accès mémoire comprend au moins trente opérations, et de préférence au moins quarante opérations. Chaque séquence temporelle d'accès mémoire peut comprendre au plus cent opérations, et de préférence au plus soixante opérations. De cette manière, le regroupement de plusieurs opérations d'accès mémoire en une même séquence temporelle d'accès mémoire permet d'obtenir un résultat statistique fiable. Notamment, pour une séquence temporelle d'accès mémoire comprenant au moins trente, voire de préférence quarante opérations d'accès mémoire, la détermination du type de séquence temporelle d'accès mémoire est effectuée avec une précision de 99%.

L'exécution de l'application informatique est représentée par le bloc S4. A partir de l'exécution de l'application informatique, des séquences temporelles d'accès mémoire sont générées.

L'étape S5 comprend l'extraction des données représentatives des séquences temporelles d'accès mémoire générées durant l'exécution de l'application. Les données représentatives sont par exemple identiques aux propriétés et aux données extraites durant l'étape S2 de l'apprentissage. Les données représentatives peuvent être regroupées en des vecteurs multidimensionnels. A l'étape S6, les vecteurs multidimensionnels peuvent être injectés dans le modèle d'apprentissage construit à l'étape S3. Puis, le type de séquence temporelle d'accès mémoire généré par l'application en cours d'exécution est déterminé à l'étape S7. Le cycle peut se répéter de l'étape S7 à l'étape S4.

A partir de l'étape de détermination, une étape de pré-chargement de données, notamment à partir d'un système de fichier, vers un système de mémoire cache, est effectuée à l'étape S8. L'étape de pré-chargement de données dépend avantageusement du type de séquence temporelle d'accès mémoire déterminé à l'étape S7. Plus précisément, l'étape de pré-chargement associe respectivement aux types de séquences temporelles d'accès mémoire déterminés des types prédéterminés de pré-chargement de données. Le cycle peut être répété de l'étape S7 à l'étape S4. Les données pré-chargées sont utilisées à l'étape S9.

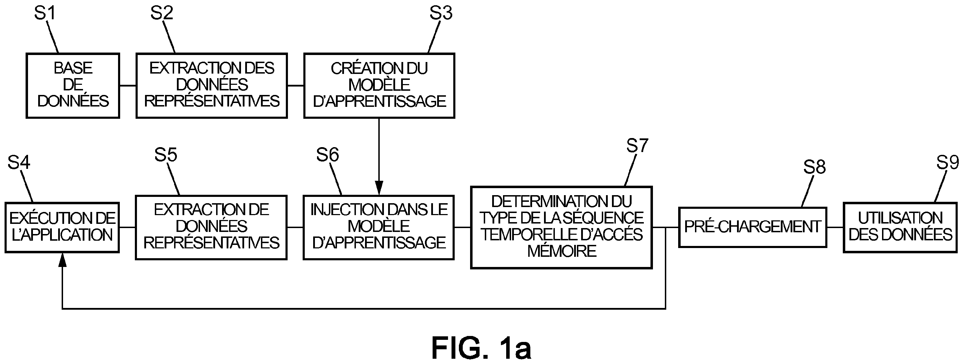

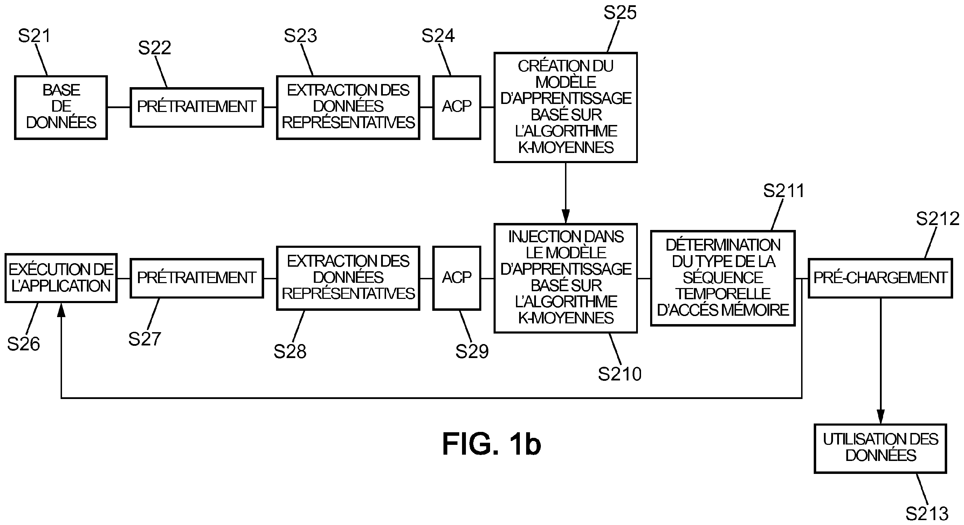

La figure 1b représente schématiquement, sous la forme d'un ordinogramme, une variante d'implémentation du procédé décrit en référence à la figure la.

L'étape d'apprentissage est illustrée par les blocs S21 à S25. Le cycle est illustré par les blocs S26 à S213. Plus précisément, l'étape de détermination du type de séquence temporelle d'accès mémoire est illustrée par les blocs S26 à S211. L'étape de pré-chargement de données est illustrée par le bloc S212. L'étape d'utilisation des données pré-chargées dans le système de mémoire cache est illustrée par l'étape S213.

L'étape d'apprentissage peut être réalisée à partir d'une base de données, illustrée au bloc S21. La base de données comprend une base de séquences temporelles d'accès mémoire. La base de séquences temporelles d'accès mémoire est par exemple celle décrite en référence à la figure la. Les séquences temporelles d'accès mémoire comprises dans la base de données sont, dans cet exemple, soumises à un prétraitement à l'étape S22. Le prétraitement comprend par exemple une normalisation d'une caractéristique définissant les séquences temporelles d'accès mémoire. Par exemple, les positions des blocs de données dans la zone mémoire où ils sont lus/écrits sont normalisées. La méthode de prétraitement utilisé est par exemple une méthode de normalisation « minmax », pouvant être écrite sous la forme :

$$z_i = \frac{x_i - \min(x)}{\max(x) - \min(x)}$$

avec $z_i$ la caractéristiques normalisée, et $x$ la caractéristique à normaliser. Ici, x correspond à la position des blocs de données dans la zone mémoire où ils sont lus et/ou écrits.

Au bloc S23, les données représentatives des séquences temporelles d'accès mémoire normalisées sont extraites et regroupées en vecteurs multidimensionnels. L'étape S23 peut être assimilée à l'étape S2 décrite en référence à la figure la. Les données représentatives sont par exemple les mêmes que celles extraites durant l'étape d'apprentissage.

Les vecteurs multidimensionnels peuvent être soumis à une projection selon une analyse en composantes principales (ou « ACP » dans la suite de la description) à l'étape S24. L'ACP permet notamment de réduire le nombre de dimensions des vecteurs multidimensionnels. Plus précisément, le but de l'ACP est de projeter les vecteurs multidimensionnels dans des espaces propres pour détecter les axes principaux des propriétés des données représentatives. Les composantes principales comprenant l'essentiel de l'information sont identifiées, permettant de réduire le nombre de dimensions des vecteurs multidimensionnels. Dans cet exemple de réalisation, les vecteurs multidimensionnels sont par exemple projetés selon deux axes.

Suite à l'ACP, les vecteurs multidimensionnels réduits sont utilisés pour la création d'un modèle d'apprentissage à l'étape S25.

Dans l'exemple particulier de réalisation décrit en référence à la figure 1b, le modèle d'apprentissage est basé sur l'utilisation d'un algorithme de type k-moyennes (ou « k-means » en anglais). L'algorithme k-moyennes (ou « k-means » en anglais) est utilisé pour regrouper des données selon un nombre de classes prédéfinies. Dans cet exemple, une classe peut être associée à au moins un type de séquence temporelle d'accès mémoire. L'algorithme k-moyennes comprend la génération de centroïdes de manière aléatoire. La génération de centroïdes est notamment basée sur la projection des vecteurs multidimensionnels réduits dans le système à deux axes obtenu suite à l'ACP. Les vecteurs multidimensionnels réduits sont assignés aux centroïdes les plus proches. Puis, les centroïdes sont recalculés en fonction des vecteurs multidimensionnels réduits qui leur ont été assignés. Le modèle d'apprentissage, basé sur l'algorithme k-moyennes, peut être utilisé lorsque les centroïdes convergent vers un couple de coordonnées stable.

En variante, la projection en ACP peut être faite selon plus de deux axes.

L'étape de détermination, représentée par les blocs S26 à S211, comprend l'exécution de l'application informatique représentée par le bloc S26. Le bloc S26 correspond au bloc S4 décrit en référence à la figure la.

A partir de l'exécution de l'application informatique, des séquences temporelles d'accès mémoire sont générées. L'étape de détermination est par exemple effectuée pour une séquence temporelle d'accès mémoire à la fois. En variante, l'étape de détermination est appliquée à plus d'une séquence temporelle d'accès mémoire à la fois. La séquence temporelle d'accès mémoire est dans cet exemple soumise à un prétraitement à l'étape S27. Le prétraitement comprend par exemple une normalisation d'une caractéristique définissant la séquence temporelle d'accès mémoire, telle que les positions des blocs de données dans la zone mémoire où ils sont lus/écrits. La méthode de prétraitement utilisée est par exemple une méthode de normalisation « minmax », pouvant être écrite sous la forme :

$$ z_i = \frac{x_i - \min(x)}{\max(x) - \min(x)}, $$

avec $z_i$ la caractéristiques normalisée, et $x_i$ la caractéristiques à normaliser. Ici, x correspond à la position des blocs de données dans la zone mémoire où ils sont lus et/ou écrits.

Au bloc S28, les données représentatives de la séquence temporelle d'accès mémoire normalisée sont extraites et regroupées en un vecteur multidimensionnel. L'étape S28 peut être assimilée à l'étape S5 décrite en référence à la figure la.

Le vecteur multidimensionnel peut être soumis à une projection selon une analyse en composantes principales (ou « ACP » dans la suite de la description) à l'étape S29. L'ACP effectuée à l'étape S29 peut être identique à l'ACP effectuée à l'étape S24. Ainsi, le vecteur multidimensionnel réduit est par exemple projeté selon deux axes.

Puis, à l'étape S210, le vecteur multidimensionnel réduit est injecté dans le modèle d'apprentissage obtenu à l'étape S25. L'étape S210 correspond à l'étape S6 décrite en référence à la figure la. Plus précisément, le vecteur multidimensionnel réduit est injecté dans le modèle d'apprentissage basé sur l'algorithme k-moyennes. Un calcul de la distance du vecteur multidimensionnel réduit avec chaque centroïde est effectué pour déterminer à l'étape S211 le type de la séquence temporelle d'accès mémoire. Par exemple, la distance euclidienne entre le vecteur multidimensionnel réduit et le vecteur coordonnée d'un centroïde est calculée comme suit :

$$ d(p,q) = \sqrt{\sum_{i=1}^{n} (qi - pi)^2} $$

Le vecteur multidimensionnel réduit est associé au centroïde avec lequel il possède la plus petite distance euclidienne. En fonction du centroïde auquel le vecteur multidimensionnel réduit est associé, le type de la séquence temporelle d'accès mémoire est déterminé.

Le nombre de classes, chaque classe étant associée à un centroïde, est supérieur ou égal au nombre de types de séquences temporelles d'accès mémoire. Par exemple, si le nombre de types de séquences temporelles d'accès mémoire est égal à quatre, l'algorithme k-moyennes génère au moins quatre centroïdes, donc au moins quatre classes. En effet, deux vecteurs, correspondant à un même type de séquence temporelle d'accès mémoire, peuvent être projetés dans l'espace propre à des positions ne permettant pas de les associer à un même centroïde. Ainsi, la création de deux centroïdes (ou deux classes) pour un même type de séquence temporelle d'accès mémoire permet d'éviter la création d'erreurs de détermination des types de séquences temporelles d'accès mémoire. Le nombre de classes de l'algorithme k-moyennes est par exemple compris entre 2 et 10. Avantageusement, le nombre de classes est compris entre 3 et 10. De manière encore plus avantageuse, le nombre de classes est compris entre 4 et 10. Le cycle peut être répété de l'étape S211 à l'étape S26.

A l'étape S212, une étape de pré-chargement de données, notamment à partir d'un système de fichier, vers un système de mémoire cache, est effectuée. L'étape S212 correspond avantageusement à l'étape S8. L'étape de pré-chargement de données dépend du type de séquence temporelle d'accès mémoire déterminé à l'étape S211. En variante, le cycle peut être répété suite à l'étape de pré-chargement S212.

L'étape S213 comprend une utilisation des données pré-chargées à l'étape S212.

Le cycle peut se répéter, de l'étape S26 jusqu'à l'étape S213.

Le procédé selon l'invention nécessite donc très peu de calculs, ce qui en fait une méthode simple d'implémentation, mais en même temps très fiable.

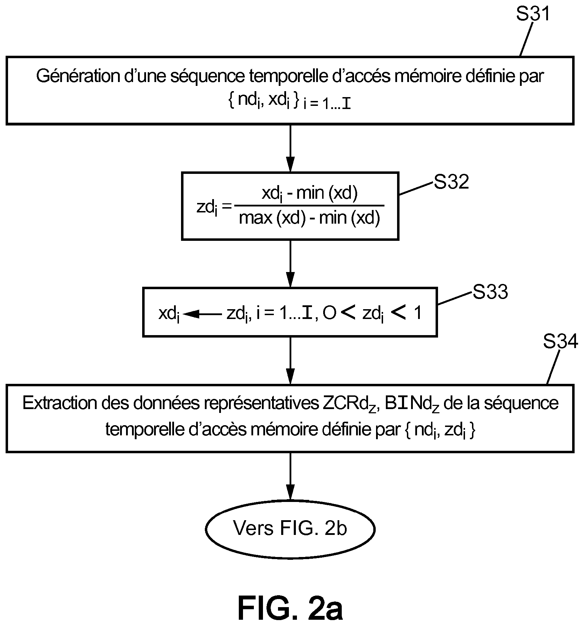

Les figures 2a à 3b illustrent un exemple particulier de réalisation du procédé décrit en référence à la figure 1b.

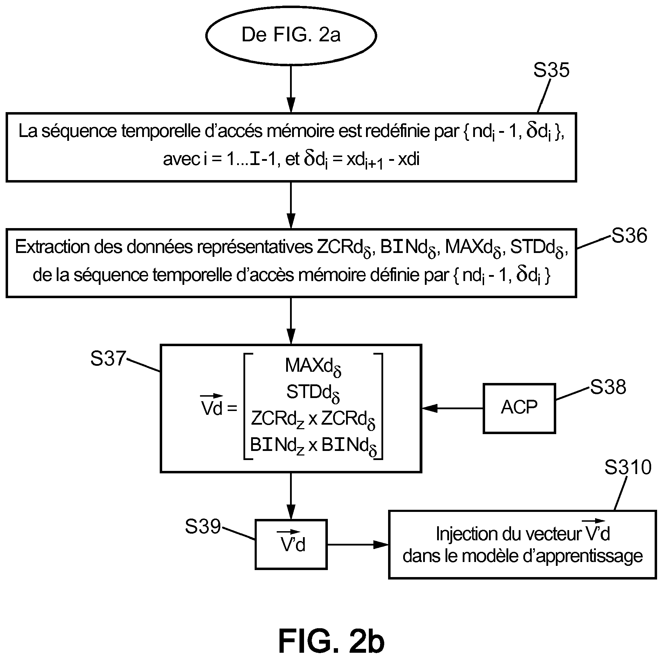

Les figures 2a et 2b sont un ordinogramme illustrant un exemple particulier de réalisation du cycle du procédé selon l'invention pour une unique séquence temporelle d'accès mémoire.

L'étape S31 correspond à l'exécution de l'application informatique. La séquence temporelle d'accès mémoire générée durant l'exécution de l'application informatique peut être définie par la taille *ndi* des blocs de données lus et/ou écrits, ainsi que les positions des blocs *xdi* de données dans la zone mémoire où ils sont lus et/ou écrits, l'indice i correspondant à chaque bloc de données (ou à chaque opération d'accès mémoire). Dans la suite de la description, la taille *ndi* des blocs de données lus et/ou écrits est appelée « taille *ndi* », et la position des blocs *xdi* de données dans la zone mémoire où ils sont lus et/ou écrits est appelée « position $xd_i$ ».

A l'étape S32, les positions $xd_i$ des blocs de données sont normalisées, utilisant la méthode de normalisation minmax décrite en référence à la figure 1b. La valeur des positions normalisées $zd_i$ est comprise entre 0 et 1. La normalisation des positions $xd_i$ permet de pouvoir appliquer les étapes du procédé sur des valeurs identiques, afin de ne pas fausser le résultat de la détermination du type de séquence temporelle d'accès mémoire.

A l'étape S33, chaque position $xd_i$ est remplacée par la position normalisée $zd_i$ correspondante. La séquence temporelle d'accès mémoire est donc définie par sa taille *ndi,* et les positions normalisées $zd_i$.

A l'étape S34, et à partir de chaque position normalisée $zd_i$ calculée, deux données représentatives de la séquence temporelle d'accès mémoire sont calculées. La première donnée est le taux de passage de la séquence temporelle d'accès mémoire par sa valeur moyenne $ZCRd_z$. La deuxième donnée est le nombre d'emplacements mémoire non vides $BINd_z$ dans l'histogramme représentant les positions $zd_i$ de la séquence temporelle d'accès mémoire. Plus précisément, les emplacements mémoire non vides $BINd_z$ de l'histogramme de la séquence temporelle d'accès mémoire représentent le nombre d'accès mémoire à un emplacement mémoire commun. Un emplacement non vide représente un emplacement mémoire dans lequel une opération d'accès mémoire a lieu.

A l'étape S35, la séquence temporelle d'accès mémoire est transformée. La séquence temporelle d'accès mémoire est définie par sa taille $ndi$ -1 et la différence $\delta d_i$ entre deux positions successives $xd_i$ et $xd_{i+1}$, avec $\delta d_i = xd_{i+1} - xd_i$. Cela permet d'intégrer un aspect temporel aux opérations d'accès mémoire de la séquence temporelle d'accès mémoire.

A l'étape S36, des données représentatives sont extraites de la séquence temporelle d'accès mémoire définie par les caractéristiques $nd_i$ -1 et $\delta d$. Plus précisément, le taux de passage de la séquence temporelle d'accès mémoire par sa valeur moyenne $ZCRd_\delta$ et le nombre d'emplacements mémoire non vides $BINd_\delta$ dans l'histogramme représentant les positions $\delta d_i$ de la séquence temporelle d'accès mémoire sont extraits. La valeur maximale de la séquence temporelle d'accès mémoire $MAXd_\delta$ est également extraite. Enfin, l'écart type des valeurs de la séquence $STDd_\delta$ est extrait.

A l'étape S37, les données représentatives calculées aux étapes S34 et S36 sont regroupées en un vecteur multidimensionnel Vd de dimension 4 :

$$\begin{bmatrix} MAXd_\delta \\ STDd_\delta \\ ZCRd_z \times ZCRd_\delta \\ BINd_z \times BINd_\delta \end{bmatrix}$$

Les taux de passage de la séquence temporelle d'accès mémoire par sa valeur moyenne $ZCRd_z$ et $ZCRd_\delta$ sont assemblés pour ajouter de la dépendance entre les séquences temporelles d'accès mémoire. Les nombres d'emplacements mémoire non vides $BINd_z$ et $BINd_\delta$ sont également assemblés pour ajouter de la dépendance entre les séquences temporelles définies aux étapes S33 et S35.

A l'étape S38, le vecteur Vd est projeté selon l'analyse en composantes principales (ou « ACP »), afin d'obtenir un vecteur V'd multidimensionnel réduit à l'étape S39. Plus précisément, la projection selon l'ACP est par exemple effectuée selon deux axes. Le vecteur multidimensionnel Vd à 4 dimensions devient le vecteur V'd à 2 dimensions.

Le vecteur multidimensionnel réduit V'd peut ensuite être appliqué au modèle d'apprentissage à l'étape S40. Le cycle peut se répéter pour chaque nouvelle séquence temporelle d'accès mémoire. Les étapes du cycle peuvent en outre être effectuées simultanément pour plusieurs séquences temporelles d'accès mémoire.

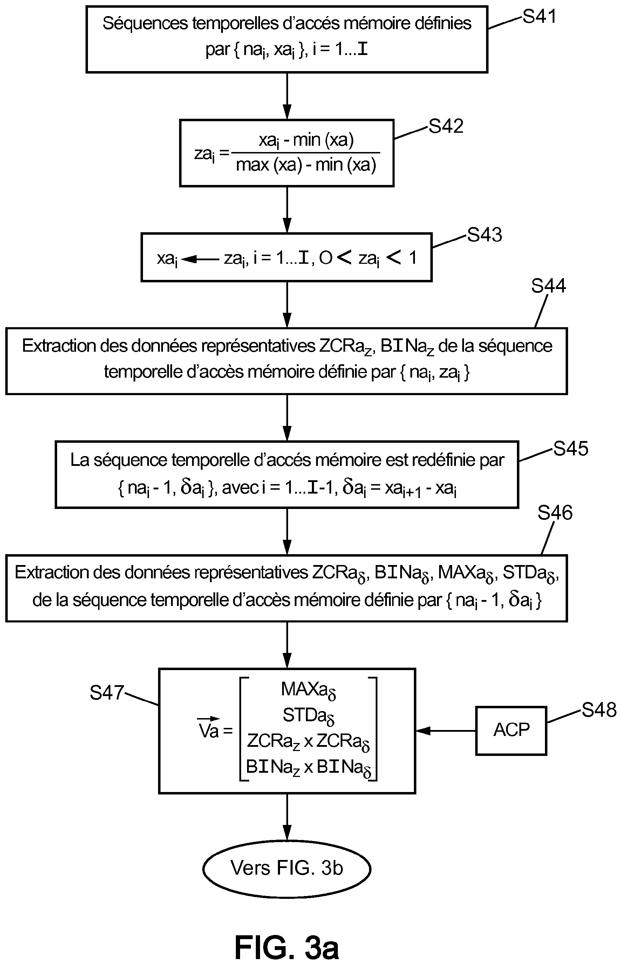

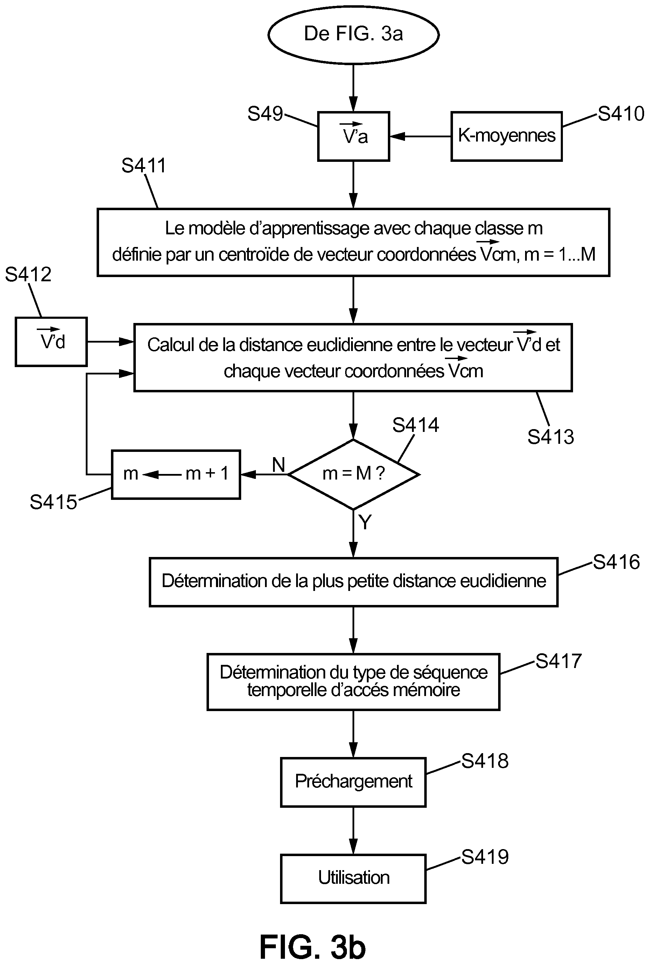

Les figures 3a et 3b sont un ordinogramme illustrant un exemple de réalisation du modèle d'apprentissage du procédé selon l'invention, ainsi que la détermination du type de séquence temporelle d'accès mémoire à partir du modèle d'apprentissage.

Les étapes S41 à S411 forment l'étape d'apprentissage. La base de données comprend une pluralité de séquences temporelles d'accès mémoire définies par leur taille $na_i$ des blocs de données lus et/ou écrits, ainsi que les positions des blocs $xai$ de données dans la zone mémoire où ils sont lus et/ou écrits. L'indice i correspond à chaque bloc de données (ou à chaque opération d'accès mémoire). Dans la suite de la description, la taille $na_i$ des blocs de données lus et/ou écrits est appelée « taille $na_i$ », et la position des blocs $xa_i$ de données dans la zone mémoire où ils sont lus et/ou écrits est appelée « position $xa_i$ ». Cela correspond à l'étape S41.

L'étape d'apprentissage est décrite pour une unique séquence temporelle d'accès mémoire, bien que l'étape d'apprentissage soit effectuée pour la pluralité de séquences temporelles d'accès mémoire comprises dans la base de données.

A l'étape S42, les positions $xa_i$ des blocs de données de la séquence temporelle d'accès mémoire sont normalisées en utilisant la méthode de normalisation « minmax » décrite en référence à la figure 1b. La valeur des positions normalisées $za_i$ est comprise entre 0 et 1.

A l'étape S43, chaque position $xa_i$ est remplacée par la position normalisée $za_i$ correspondante.

A l'étape S44, et à partir de la séquence temporelle d'accès mémoire normalisée, deux données représentatives de la séquence temporelle d'accès mémoire sont calculées. La première donnée est le taux de passage de la séquence temporelle d'accès mémoire par sa valeur moyenne $ZCRa_z$. La deuxième donnée est le nombre d'emplacements mémoire non vides $BINa_z$ dans l'histogramme représentant les positions $za_i$ de la séquence temporelle d'accès mémoire. Plus précisément, les emplacements mémoire non vides de l'histogramme de la séquence temporelle d'accès mémoire représentent le nombre d'accès mémoire à un emplacement mémoire commun. Un emplacement non vide représente un emplacement mémoire dans lequel une opération d'accès mémoire a lieu.

A l'étape S45, la séquence temporelle d'accès mémoire est transformée en une séquence temporelle d'accès mémoire représentée par sa taille $na_i$ -1 et la différence $\delta a_i$ entre deux positions successives $xa_i$ et $xa_{i+1}$, avec $\delta a_i = xa_{i+1} - xa_i$. Cela permet d'intégrer un aspect temporel aux opérations d'accès mémoire de la séquence temporelle d'accès mémoire.

A l'étape S46, des données représentatives sont extraites de la séquence temporelle d'accès mémoire définie par les caractéristiques $na_i$ -1 et $\delta a$. Plus précisément, le taux de passage de la séquence temporelle d'accès mémoire par sa valeur moyenne $ZCRa_\delta$ est extrait et le nombre d'emplacements mémoire non vides $BINa_\delta$ dans l'histogramme est extrait. La valeur maximale de la séquence temporelle d'accès mémoire $MAXa_\delta$ est également extraite. Enfin, l'écart type des valeurs de la séquence $STDa_\delta$ est extrait.

A l'étape S47, les propriétés des données représentatives calculées sont regroupées en un vecteur multidimensionnel Va de dimension 4 :

$$\overrightarrow{Va} \begin{bmatrix} MAXa_\delta \\ STDa_\delta \\ ZCRa_z \times ZCRa_\delta \\ BINa_z \times BINa_\delta \end{bmatrix}$$

Les taux de passage de la séquence temporelle d'accès mémoire par sa valeur moyenne $ZCRd_z$ et $ZCRd_\delta$ sont assemblés pour ajouter de la dépendance entre les séquences temporelles d'accès mémoire. Les nombres d'emplacements mémoire non vides $BINd_z$ et $BINd_\delta$ sont également assemblés pour ajouter de la dépendance entre les séquences temporelles définies aux étapes S43 et S45.

A l'étape S48, le vecteur Va est projeté selon l'analyse en composantes principales (ou « ACP »), afin d'obtenir un vecteur V'a multidimensionnel réduit à l'étape S49. Plus précisément, la projection selon l'ACP est par exemple effectuée selon deux axes. Le vecteur multidimensionnel Va à 4 dimensions devient le vecteur V'a à 2 dimensions.

A l'étape S410, l'algorithme de type k-moyennes (ou «k-means» en anglais) est appliqué au vecteur multidimensionnel réduit V'a. L'algorithme k-moyennes, à partir du vecteur V'a, génère de manière aléatoire des centroïdes correspondant à une classe. Dans l'exemple décrit ci-avant, un unique vecteur multidimensionnel V'a est obtenu. Lorsque l'étape d'apprentissage est effectuée sur une pluralité de séquences temporelles d'accès mémoire, le nombre de vecteurs multidimensionnels réduits V'a est important. Cela permet de créer autant de classes que voulues. Le nombre de classes est prédéterminé en fonction du nombre de types de séquences temporelles d'accès mémoire à déterminer. Une classe peut correspondre à un type de séquence temporelle d'accès mémoire. Lorsque les centroïdes convergent vers un vecteur coordonnées stable, le modèle d'apprentissage est construit.

A l'étape S411, les classes définies par leur centroïdes de vecteur $Vc_m$ sont définies. L'indice m représente chaque classe, avec m compris entre 1 et M, M étant le nombre total de classes. Chaque classe correspond à un type de séquence temporelle d'accès mémoire. Un type de séquence temporelle d'accès mémoire peut correspondre à plusieurs classes.

A l'étape S412, le vecteur multidimensionnel réduit V'd, obtenu à l'étape S39 décrite en référence à la figure 2b, est appliqué au modèle d'apprentissage. Le modèle est utilisé pour classifier chaque séquence temporelle d'accès mémoire correspondant à un vecteur multidimensionnel réduit V'd. Le vecteur multidimensionnel réduit V'd est projeté dans l'espace propre défini par l'ACP et l'algorithme K-moyennes. La distance euclidienne entre chaque vecteur $Vc_m$ correspondant à un centroïde, et le vecteur multidimensionnel réduit V'd est calculée à l'étape S413.

Les étapes S414 et S415 permettent de vérifier que la distance euclidienne entre le vecteur multidimensionnel réduit V'd et tous les centroïdes a bien été effectuée. La distance euclidienne minimale dm est retenue à l'étape S416. Le type de séquence temporelle d'accès mémoire est celui associé à la classe dont le centroïde présente la plus petite distance euclidienne avec le vecteur multidimensionnel réduit V'd. La détermination du type de séquence est effectuée à l'étape S417.

La détermination du type de séquence temporelle d'accès mémoire permet de déclencher un mécanisme de pré-chargement des données associé au type de séquence temporelle d'accès mémoire déterminé à l'étape S418. Une étape d'utilisation des données préchargées S419 est en outre prévue.

## Revendications

1. Procédé d'amélioration du temps d'exécution d'une application informatique, comprenant au moins un cycle comprenant :

➟ une étape de détermination du type de séquence temporelle d'accès mémoire se déroulant lors de l'exécution de ladite application informatique, l'étape de détermination étant configurée pour détecter 4 types de séquence temporelle d'accès mémoire qui sont :

o le type d'accès séquentiel dans lequel des blocs de données sont lus et/ou écrits consécutivement dans une zone mémoire,
o le type d'accès multi-séquentiel avec un décalage régulier entre les séquences, dans lequel des blocs de données sont lus et/ou écrits à partir de plusieurs endroits différents d'une zone mémoire, en passant régulièrement d'un endroit à l'autre,
o le type d'accès aléatoire,
o le type d'accès complexe dans lequel la séquence est formée de sous-séquences régulières ou quasi-régulières qui se répètent mais de manière désordonnée et/ou dans lequel la séquence est régulière ou quasi-régulière et est formée de sous-séquences qui se répètent mais de manière désordonnée,

> une étape de pré-chargement de données, à partir d'un système de fichier, vers un système de mémoire cache, en fonction du type de de séquence temporelle d'accès mémoire déterminé,
> ladite étape de détermination étant réalisée par un modèle d'apprentissage ayant été préalablement paramétré à partir d'une base de données desdits types prédéterminés de séquences temporelles d'accès mémoire,
> le type de séquence temporelle d'accès mémoire étant défini par la variation au cours du temps de deux caractéristiques qui sont d'une part la taille des blocs de données lus et/ou écrits et d'autre part la position des blocs de données dans la zone mémoire où ils sont lus et/ou écrits.

2. Procédé d'amélioration du temps d'exécution d'une application informatique selon la revendication 1, **caractérisé en ce que** :
> ledit cycle est répété en permanence et en temps réel.

3. Procédé d'amélioration du temps d'exécution d'une application informatique selon la revendication 1 ou 2, **caractérisé en ce que** :
> ladite étape de pré-chargement associe respectivement aux types de séquence temporelle d'accès mémoire déterminés des types prédéterminés de pré-chargement de données.

4. Procédé d'amélioration du temps d'exécution d'une application informatique selon l'une des revendications 1 à 3, **caractérisé en ce que** :
> aucune donnée n'est pré-chargée dans l'étape de pré-chargement associée au type d'accès aléatoire.

5. Procédé d'amélioration du temps d'exécution d'une application informatique selon l'une quelconque des revendications précédentes, **caractérisé en ce qu'**une séquence temporelle d'accès mémoire comprend plusieurs opérations d'accès mémoire qui se succèdent dans le temps :

> de préférence au moins 30 opérations, encore plus de préférence au moins 40 opérations,
> et/ou de préférence au plus 100 opérations, encore plus de préférence au plus 60 opérations.

6. Procédé d'amélioration du temps d'exécution d'une application informatique selon la revendication 5, **caractérisé en ce que** :

> une séquence temporelle d'accès mémoire est sous la forme d'une fenêtre glissante au cours du temps et comprenant un nombre fixe d'opérations.

7. Procédé d'amélioration du temps d'exécution d'une application informatique selon l'une quelconque des revendications précédentes, **caractérisé en ce que** :
> le cycle comprend, après ladite étape de pré-chargement de données, une étape d'utilisation desdites données pré-chargées dans le système de mémoire cache.

8. Procédé d'amélioration du temps d'exécution d'une application informatique selon l'une quelconque des revendications précédentes, **caractérisé en ce que** :
> ledit modèle d'apprentissage n'a été préalablement paramétré, à partir d'une base de données de certains types prédéterminés de séquences temporelles d'accès mémoire, qu'une seule fois, mais il peut être re-paramétré en cas d'ajout d'au moins un nouveau type prédéterminé de séquence temporelle d'accès mémoire dans ladite base de données.

9. Procédé d'amélioration du temps d'exécution d'une application informatique selon l'une quelconque des revendications précédentes, **caractérisé en ce que** :
> ledit modèle d'apprentissage est basé sur l'utilisation d'un algorithme de type « k-Moyennes ».

10. Procédé d'amélioration du temps d'exécution d'une application informatique selon la revendication 3 et selon la revendication 9, **caractérisé en ce que** :
> le nombre des classes dudit algorithme est strictement supérieur au nombre de types prédéterminés de pré-chargement de données.

11. Procédé d'amélioration du temps d'exécution d'une application informatique selon la revendication 9 ou 10, **caractérisé en ce que** :
> le nombre des classes dudit algorithme est compris entre 2 et 10, de préférence entre 3 et 10.

12. Procédé d'amélioration du temps d'exécution d'une application informatique selon l'une quelconque des revendications précédentes, **caractérisé en ce que** le cycle comprend, préalablement à ladite étape de détermination, successivement :

> une étape d'extraction de propriétés de données représentatives du type de séquence temporelle d'accès mémoire, suivie d'une étape de regroupement de ces propriétés extraites en vecteurs multidimensionnels,
> ladite étape d'extraction étant de préférence précédée d'une étape de prétraitement réalisant une normalisation desdites données représentatives,

➢ ladite étape de regroupement étant de préférence suivie par une étape de projection par analyse en composantes principales, réduisant le nombre de dimensions desdits vecteurs.

13. Procédé d'amélioration du temps d'exécution d'une application informatique selon l'une quelconque des revendications précédentes, **caractérisé en ce que** :

➢ ladite application informatique tourne sur au moins plusieurs centaines de processus d'un ensemble de noeuds de calcul d'un même réseau, de préférence sur au moins plusieurs milliers de ces processus, encore plus de préférence sur au moins plusieurs dizaines de milliers de ces processus.

➢ ladite application accède à plusieurs centaines de fichiers depuis un même processus.

**Patentansprüche**

1. Verfahren zur Verbesserung der Ausführungszeit einer Computeranwendung, das wenigstens einen Zyklus umfasst, der Folgendes umfasst:

➢ einen Schritt zur Bestimmung des Typs der zeitlichen Sequenz des Speicherzugriffs, die bei der Ausführung der Computeranwendung auftritt, wobei der Bestimmungsschritt dazu ausgebildet ist, vier Typen von zeitlichen Sequenzen des Speicherzugriffs zu erkennen, welche sind:

o den sequentiellen Zugriffstyp, bei dem Datenblöcke nacheinander in einen Speicherbereich eingefügt und/oder geschrieben werden,
o der mehrfach sequentielle Zugriffstyp mit einem regelmäßigen Zeitversatz zwischen den Sequenzen, bei dem Datenblöcke von mehreren verschiedenen Orten in einem Speicherbereich eingefügt und/oder geschrieben werden, wobei sie regelmäßig von einem Ort zum anderen wechseln,
o de Typ des zufälligen Zugriffs,
o den komplexen Zugriffstyp, bei dem die Sequenz aus regelmäßigen oder quasi-regelmäßigen Untersequenzen besteht, die sich wiederholen, aber in ungeordneter Weise, und/oder bei dem die Sequenz regelmäßig oder quasi-regelmäßig ist und aus Untersequenzen besteht, die sich wiederholen, aber in ungeordneter weise,

> einen Schritt des Vorladens von Daten aus einem Dateisystem in ein Cache-Speichersystem entsprechend dem Typ der ermittelten zeitlichen Sequenz des Speicherzugriffs,
> wobei der Bestimmungsschritt durch ein Lernmodell durchgeführt wird, das zuvor aus einer Datenbank der vorbestimmten Typen von Speicherzugriffszeitsequenzen parametrisiert wurde,
➢ wobei der Typ der zeitlichen Sequenz des Speicherzugriffs durch die zeitliche Veränderung von zwei Merkmalen definiert wird, nämlich einerseits der Größe der Datenblöcke, die gelesen und/oder geschrieben werden, und andererseits der Position der Datenblöcke in dem Speicherbereich, in dem sie gelesen und/oder geschrieben werden.

2. Verfahren zur Verbesserung der Ausführungszeit einer Computeranwendung nach Anspruch 1, **dadurch gekennzeichnet, dass**:
➢ der genannte Zyklus ständig und in Echtzeit wiederholt wird.

3. Verfahren zur Verbesserung der Ausführungszeit einer Computeranwendung nach Anspruch 1 oder 2, **dadurch gekennzeichnet, dass**:
> der genannte Vorlade-Schritt den bestimmten zeitlichen Sequenztypen des Speicherzugriffs jeweils vorbestimmte Typen des Vorladens von Daten zuordnet.

4. Verfahren zur Verbesserung der Ausführungszeit einer Computeranwendung nach einem der Ansprüche 1 bis 3, **dadurch gekennzeichnet, dass**:
> keine Daten in dem Vorladeschritt, der mit dem wahlfreien Zugriffstyp verknüpft ist, vorab geladen werden.

5. Verfahren zur Verbesserung der Ausführungszeit einer Computeranwendung nach einem der vorhergehenden Ansprüche, **dadurch gekennzeichnet, dass** eine zeitliche Sequenz von Speicherzugriffen mehrere Speicherzugriffsoperationen umfasst, die zeitlich aufeinander folgen:

➢ bevorzugt wenigstens 30 Operationen, noch stärker bevorzugt 40 Operationen,
➢ und/oder bevorzugt höchstens 100 Operationen, noch stärker bevorzugt höchstens 60 Operationen.

6. Verfahren zur Verbesserung der Ausführungszeit einer Computeranwendung nach Anspruch 5, **dadurch gekennzeichnet, dass**:
➢ eine zeitliche Sequenz von Speicherzugriffen in Form eines zeitlich gleitenden Fensters vorliegt und eine feste Anzahl von Operationen umfasst.

7. Verfahren zur Verbesserung der Ausführungszeit einer Computeranwendung nach einem der vorhergehenden Ansprüche, **dadurch gekennzeichnet, dass**:

   ➢ der Zyklus nach dem Schritt des Vorladens von Daten einen Schritt der Verwendung der vorab in das Cache-Speichersystem geladenen Daten umfasst.

8. Verfahren zur Verbesserung der Ausführungszeit einer Computeranwendung nach einem der vorhergehenden Ansprüche, **dadurch gekennzeichnet, dass**:

   ➢ das Lernmodell ausgehend von einer Datenbank mit bestimmten vorbestimmten Typen von Speicherzugriffszeitsequenzen nur einmal vorher parametrisiert wurde, aber es neu parametrisiert werden kann, wenn wenigstens ein neuer vorbestimmter Typ von Speicherzugriffszeitsequenz in der Datenbank hinzugefügt wird.

9. Verfahren zur Verbesserung der Ausführungszeit einer Computeranwendung nach einem der vorhergehenden Ansprüche, **dadurch gekennzeichnet, dass**:

   ➢ das Lernmodell auf der Verwendung eines Algorithmus vom Typ "k-Mittelwerte" basiert.

10. Verfahren zur Verbesserung der Ausführungszeit einer Computeranwendung nach Anspruch 3 und nach Anspruch 9, **dadurch gekennzeichnet, dass**:
    ➢ die Anzahl der Klassen des genannten Algorithmus strikt größer ist als die Anzahl der vorbestimmten Typen des Vorladens der Daten.

11. Verfahren zur Verbesserung der Ausführungszeit einer Computeranwendung nach Anspruch 9 oder 10, **dadurch gekennzeichnet, dass**:
    ➢ die Anzahl der Klassen des genannten Algorithmus zwischen 2 und 10, bevorzugt zwischen 3 und 10, liegt.

12. Verfahren zur Verbesserung der Ausführungszeit einer Computeranwendung nach einem der vorhergehenden Ansprüche, **dadurch gekennzeichnet, dass** der Zyklus vor dem Bestimmungsschritt aufeinanderfolgend umfasst:

    ➢ einen Schritt der Extraktion von Dateneigenschaften, die für den Typ der zeitlichen Sequenz des Speicherzugriffs repräsentativ sind, gefolgt von einem Schritt der Gruppierung dieser extrahierten Eigenschaften in mehrdimensionale Vektoren,
    ➢ wobei dem Extraktionsschritt bevorzugt ein Vorverarbeitungsschritt vorausgeht, der eine Normalisierung der repräsentativen Daten durchführt,

    ➢ wobei dem Gruppierungsschritt bevorzugt ein Hauptkomponentenanalyse-Projektionsschritt folgt, der die Anzahl der Dimensionen der Vektoren verringert.

13. Verfahren zur Verbesserung der Ausführungszeit einer Computeranwendung nach einem der vorhergehenden Ansprüche, **dadurch gekennzeichnet, dass**:

    ➢ die Computeranwendung auf wenigstens mehreren hundert Prozessen eines Satzes von Rechenknoten desselben Netzwerks läuft, bevorzugt auf wenigstens mehreren tausend dieser Prozesse, noch stärker bevorzugt auf wenigstens mehreren zehntausend dieser Prozesse,
    ➢ die Anwendung von einem einzigen Prozess aus auf mehrere hundert Dateien zugreift.

## Claims

1. Method for improving the execution time of a computer application, comprising at least one cycle comprising:

   ➢ a step of determining the type of memory access time sequence occurring during the execution of said computer application,
   ➢ the determination step being configured to detect 4 types of memory access time sequence that are:

   o the sequential access type wherein data blocks are read and/or written consecutively in a memory area,
   o the multi-sequential access type with a regular offset between the sequences, wherein data blocks are read and/or written from a plurality of different locations of a memory area, by switching regularly from one location to the other,
   o the random access type,
   o the complex access type wherein the sequence is formed of regular or quasi-regular subsequences that are repeated but in a disordered way and/or wherein the sequence is regular or quasi-regular and is formed of subsequences that are repeated but in a disordered way,

   ➢ a step of preloading data, from a file system, to a cache memory system, depending on the determined type of memory access time sequence,
   ➢ said determination step being performed by a learning model having been previously configured from a database of said predetermined types of memory access time sequences,

➢ the type of memory access time sequence being defined by the temporal variation of two features that are on the one hand the size of the data blocks read and/or written and on the other hand the position of the data blocks in the memory area where they are read and/or written.

2. Method for improving the execution time of a computer application according to claim 1, **characterised in that**:

➢ said cycle is repeated continuously and in real time.

3. Method for improving the execution time of a computer application according to claim 1 or 2, **characterised in that**:

➢ said preloading step respectively associates determined types of memory access time sequences with predetermined data preloading types.

4. Method for improving the execution time of a computer application according to one of claims 1 to 3, **characterised in that**:

➢ no data are preloaded in the preloading step associated with the random access type.

5. Method for improving the execution time of a computer application according to any one of the preceding claims, **characterised in that** a memory access time sequence comprises a plurality of memory access operations that follow one another in time:

➢ preferably at least 30 operations, even more preferably at least 40 operations,
➢ and/or preferably at most 100 operations, even more preferably at most 60 operations.

6. Method for improving the execution time of a computer application according to claim 5, **characterised in that**:

➢ a memory access time sequence is in the form of a temporal sliding window and comprising a fixed number of operations.

7. Method for improving the execution time of a computer application according to any one of the preceding claims, **characterised in that**:

➢ the cycle comprises, after said data preloading step, a step of using said preloaded data in the cache memory system.

8. Method for improving the execution time of a computer application according to any one of the preceding claims, **characterised in that**:

➢ said learning model has previously been configured, from a database of certain predetermined types of memory access time sequences, only once, but it can be reconfigured in the event that at least one new predetermined type of memory access time sequence is added to said database.

9. Method for improving the execution time of a computer application according to any one of the preceding claims, **characterised in that**:

➢ said learning model is based on the use of a "k-means" type of algorithm.

10. Method for improving the execution time of a computer application according to claim 3 and according to claim 9, **characterised in that**:

➢ the number of classes of said algorithm is strictly greater than the number of predetermined data preloading types.

11. Method for improving the execution time of a computer application according to claim 9 or 10, **characterised in that**:

➢ the number of classes of said algorithm is between 2 and 10, preferably between 3 and 10.

12. Method for improving the execution time of a computer application according to any one of the preceding claims, **characterised in that** the cycle comprises, prior to said determination step, successively:

➢ a step of extracting data properties representative of the type of memory access time sequence, followed by a step of grouping these extracted properties into multidimensional vectors,
➢ said extraction step preferably being preceded by a preprocessing step performing a normalisation of said representative data,
➢ said grouping step preferably being followed by a step of projection by principal component analysis, reducing the number of dimensions of said vectors.

13. Method for improving the execution time of a computer application according to any one of the preceding claims, **characterised in that**:

➢ said computer application runs in at least several hundreds of processes of a set of compute nodes of a same network, preferably in at least several thousand of these processes, more preferably in at least several tens of thousands of these processes.
➢ said application accesses several hundreds of files from the same process.

S1

S2

S3

| BASE DE DONNÉES | EXTRACTION DES DONNÉES REPRÉSENTATIVES | CRÉATION DU MODÈLE D'APPRENTISSAGE |

S4

S5

S6

S7

S8

S9

| EXÉCUTION DE L'APPLICATION | EXTRACTION DE DONNÉES REPRÉSENTATIVES | INJECTION DANS LE MODÈLE D'APPRENTISSAGE | DETERMINATION DU TYPE DE LA SÉQUENCE TEMPORELLE D'ACCÉS MÉMOIRE | PRÉ-CHARGEMENT | UTILISATION DES DONNÉES |

# FIG. 1a

S21

S22

S23

S24

S25

| BASE DE DONNÉES | PRÉTRAITEMENT | EXTRACTION DES DONNÉES REPRÉSENTATIVES | ACP | CRÉATION DU MODÈLE D'APPRENTISSAGE BASÉ SUR L'ALGORITHME K-MOYENNES |

INJECTION DANS LE MODÈLE D'APPRENTISSAGE BASÉ SUR L'ALGORITHME K-MOYENNES

S211

| EXÉCUTION DE L'APPLICATION | PRÉTRAITEMENT | EXTRACTION DES DONNÉES REPRÉSENTATIVES | ACP | INJECTION DANS LE MODÈLE D'APPRENTISSAGE BASÉ SUR L'ALGORITHME K-MOYENNES | DÉTERMINATION DU TYPE DE LA SÉQUENCE TEMPORELLE D'ACCÉS MÉMOIRE | PRÉ-CHARGEMENT |

S212

S26

S27

S28

S29

S210

**FIG. 1b**

UTILISATION DES DONNÉES

S213

S31

Génération d'une séquence temporelle d'accés mémoire définie par
$\{ nd_i, xd_i \}_{i = 1...I}$

S32

$$zd_i = \frac{xd_i - \min(xd)}{\max(xd) - \min(xd)}$$

S33

$$xd_i \longleftarrow zd_i, i = 1...I, O < zd_i < 1$$

S34

Extraction des données représentatives $ZCRd_z$, $BINd_z$ de la séquence
temporelle d'accès mémoire définie par $\{ nd_i, zd_i \}$

Vers FIG. 2b

# FIG. 2a

De FIG. 2a

S35

La séquence temporelle d'accés mémoire est redéfinie par $\{ nd_i - 1, \delta d_i \}$, avec i = 1...I-1, et $\delta d_i = xd_{i+1} - xdi$

S36

Extraction des données représentatives $ZCRd_\delta$, $BINd_\delta$, $MAXd_\delta$, $STDd_\delta$, de la séquence temporelle d'accès mémoire définie par $\{ nd_i - 1, \delta d_i \}$

S37

$$\vec{Vd} = \begin{bmatrix} MAXd_\delta \\ STDd_\delta \\ ZCRd_z \times ZCRd_\delta \\ BINd_z \times BINd_\delta \end{bmatrix}$$

S38

ACP

S39

$\vec{V'd}$

S310

Injection du vecteur $\vec{V'd}$ dans le modèle d'apprentissage

## FIG. 2b

Séquences temporelles d'accés mémoire définies par $\{ na_i, xa_i \}$, i = 1...I — S41

$$za_i = \frac{xa_i - \min(xa)}{\max(xa) - \min(xa)}$$ — S42

$xa_i \longleftarrow za_i$, i = 1...I, O < $za_i$ < 1 — S43

Extraction des données représentatives $ZCRa_z$, $BINa_z$ de la séquence temporelle d'accès mémoire définie par $\{ na_i, za_i \}$ — S44

La séquence temporelle d'accés mémoire est redéfinie par $\{ na_i - 1, \delta a_i \}$, avec i = 1...I-1, $\delta a_i = xa_{i+1} - xa_i$ — S45

Extraction des données représentatives $ZCRa_\delta$, $BINa_\delta$, $MAXa_\delta$, $STDa_\delta$, de la séquence temporelle d'accès mémoire définie par $\{ na_i - 1, \delta a_i \}$ — S46

S47 — $$\vec{Va} = \begin{bmatrix} MAXa_\delta \\ STDa_\delta \\ ZCRa_z \times ZCRa_\delta \\ BINa_z \times BINa_\delta \end{bmatrix}$$ — ACP — S48

Vers FIG. 3b

## FIG. 3a

FIG. 3b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7676630 B
- US 6789171 B

- EP 2947557 A

**Littérature non-brevet citée dans la description**

- **TARA M. MADHYASTHA ; DANIEL A. REED.** Input/Output Access Pattern Classification Using Markov Models. *In proccedings of the Fifth Workshop on Input/Output in Parallel and Distributed Systems,* 57-67

- **HE, JUN ; BENT, JOHN ; TORRES, AARON ; GRIDER, GARY ; GIBSON, GARTH ; MALTZAHN, CARLOS ; SUN, XIAN-HE.** I/O Accélération with Pattern Detection. *Proceedings of the 22Nd International Symposium on High-performance Parallel and Distributed Computing,* 25-36